# EUROPEAN PATENT SPECIFICATION

(11) **EP 1 052 435 B1**
(45) Date of publication and mention of the grant of the patent: **17.11.2004**
(21) Application number: 00110151.8
(22) Date of filing: 12.05.2000
(51) Int. Cl.: F16J 9/00, F16J 9/22

(54) **Piston ring carrier with cooling cavity and method of manufacturing the same**
Kolbenringträger mit Kühlhohlraum und Verfahren zu dessen Herstellung
Support de segment de piston avec cavité de refroidissement et son procédé de fabrication

(30) Priority: 14.05.1999 JP 13477299; 28.04.2000 JP 2000130103
(43) Date of publication of application: 15.11.2000
(73) Proprietor: MITSUBISHI MATERIALS CORPORATION, Chiyoda-ku Tokyo (JP); Mitsubishi Fuso Truck and Bus Corporation, Tokyo (JP)
(72) Inventor: Nakayama, Ryoji, Mitsubishi Materials Corp., Niigata-shi, Niigata-ken (JP); Komasaki, Satohiro, Mitsubishi Materials Corp., Niigata-shi, Niigata-ken (JP); Hanata, Kunio, Mitsubishi Materials Corp., 5-1,Marunouchi 1-chome,Chiyoda-ku, Tokyo (JP); Yamamoto, Hidetsugu, Mitsubishi Motors Corp., Minato-ku, Tokyo (JP)
(74) Representative: HOFFMANN - EITLE

(56) References cited:
- EP-A- 0 877 160
- DE-A- 3 927 509
- DE-A- 19 722 053
- FR-A- 1 244 722

## Description

### BACKGROUND OF THE INVENTION

### 1. Field of the Invention

The present invention relates to a piston ring carrier with a cooling cavity for use in internal combustion engines, etc.

### 2. Description of the Related Art

Reference is directed to DE-A-39 27 509 and EP-A-0,877,160.

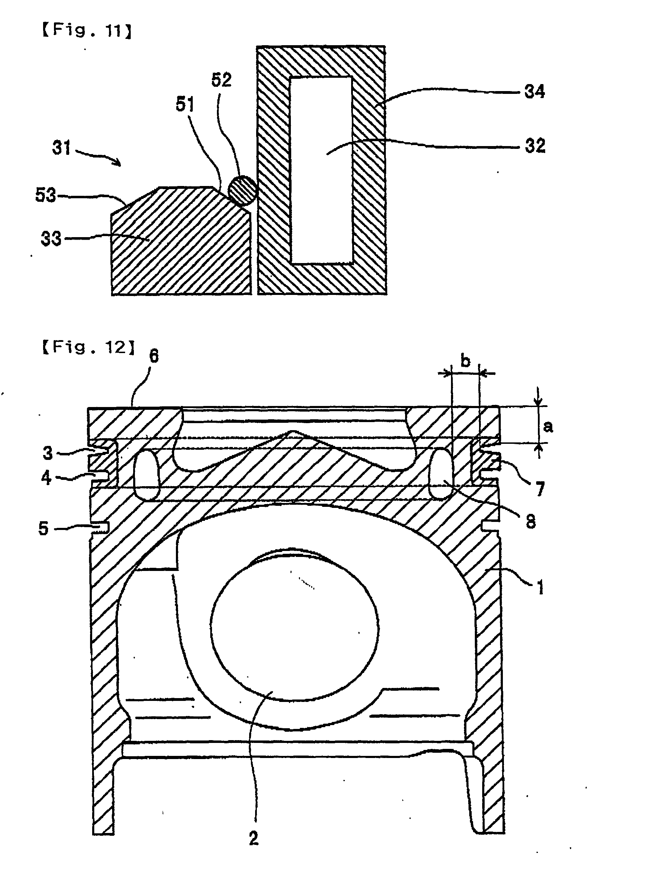

Fig. 12 of the present application shows one example of a conventional piston used in an internal combustion engine. Referring to Fig. 12, numeral 1 denotes a piston body formed, for example, by casting an aluminum alloy as a raw material. Numeral 2 denotes a piston pin bore formed in the piston body 1. A plurality of piston ring grooves 3, 4 and 5 are formed in an outer peripheral surface of the piston body 1. Piston rings sliding over an inner peripheral surface of a cylinder are, though not shown, assembled in the piston ring grooves 3, 4 and 5, respectively. In particular, the piston rings assembled in the piston ring grooves 3 and 4 on the side close to a top surface 6 are positioned on the combustion chamber side and function to seal off gas and dissipate heat. The piston ring assembled in the remaining piston ring groove 5 serves as an oil ring for lubrication control.

The piston ring groove 3 closest to the top surface 6 is especially required to have wear resistance at high temperatures. Combustion gas residing in a gap, which is left between the outer peripheral surface of the piston and the inner peripheral surface of the cylinder at a position closer to the combustion chamber side than the piston ring assembled in the piston ring groove 3, is discharged as exhaust gas without being combusted. For the purpose of cleaning the exhaust gas, it is desired that a distance a between the top surface 6 and the piston ring groove 3 be as small as possible. However, a reduction of the distance a would raise a risk of increasing a temperature at the piston ring groove 3 and causing a gas leakage because of increased wear. In the piston shown in Fig. 12, therefore, the two piston ring grooves 3 and 4 closer to the top surface 6 are formed in a piston ring carrier 7, also called Träger, which is made of Niresist cast iron separately from the piston body 1. The piston ring carrier 7 is cast in the piston body 1 at the same time as when the piston body 1 is cast.

Further, for cooling the piston ring grooves 3, 4 and 5 against combustion heat, etc., an annular cooling cavity 8 is formed inward of the piston ring grooves 3, 4 and 5, allowing oil to flow therethrough for cooling. As described in Japanese Examined Utility Model Application publication No. 58-52346, for example, the cooling cavity 8 has been conventionally formed by using a salt core when the piston body 1 is cast. After the casting of the piston body 1, the salt core is dissolved with water and removed.

In the case of forming the cooling cavity 8 by using the salt core, however, there is a limitation in reducing a distance *b* between the cooling cavity 8 and the piston ring grooves 3, 4. On the other hand, the distance *b* should be set to a smaller value from the viewpoint of enhancing an effect of cooling the piston ring grooves 3 and 4.

In consideration of the above, Japanese Unexamined Patent Application Publication No. 5-240347, for example, proposes it to form a cooling cavity by joining an annular part (molding), which is separate from a piston body and a ring carrier body, to the inner periphery side of the ring carrier body so that the cooling cavity is positioned closer to the piston ring grooves. A piston ring carrier obtained by joining the ring carrier body and the molding together is cast in the piston body at the same time as when the piston body is cast. Further, in the piston ring carrier disclosed in the above-cited Publication, the molding is in the form of a metal plate of stainless steel, and has a substantially channel-shaped cross-section. The molding is fitted to a spigot-shaped portion formed in an inner peripheral surface of the ring carrier body, and is joined to the ring carrier body by arc welding, etc. Additionally, the ring carrier body is made of Niresist cast iron or the like.

However, the piston ring carrier disclosed in the above-cited Japanese Unexamined Patent Application Publication No. 5-240347 has a problem that joint between the ring carrier body and the molding is not reliable. When employing arc welding as joining means, particularly, welding defects such as blow holes tend to occur in a joined portion. Also, it is troublesome to fit the molding having a substantially channel-shaped cross-section to the spigot-shaped portion formed in the inner peripheral surface of the ring carrier body. Further, in the case where the piston body is made of an aluminum alloy, the piston ring carrier requires to be plated with an aluminum-base material prior to casting the piston ring carrier in the piston body because of poor compatibility of the piston body in the casting-in step with the ring carrier body made of Niresist cast iron and the molding in the form of a metal plate of stainless steel, which are disclosed in the above-cited Publication. However, a sufficient level of joint strength cannot be achieved even with such plating, and the additional plating step pushes up a production cost.

With the view of solving the problems set forth above, an object of the present invention is to provide a piston ring carrier with a cooling cavity and a method of manufacturing the piston ring carrier, which can enhance an effect of cooling piston rings, and which can improve manufacturability and reliability.

According to the invention from one aspect, there is provided a piston ring carrier with a cooling cavity, for casting in a piston body and for receiving a piston ring, said piston ring carrier comprising an annular ring carrier body of a metal-base sintered material for receiving said piston ring; and an annular cavity forming member of tubular material connected to the inner periphery of said ring carrier body, said ring carrier body being of a material which is contractable upon sintering to join said ring carrier body and said cavity forming member together by sinter-fitted joint, said cooling cavity being provided by the enclosed space in said cavity forming member, an inner peripheral surface of said piston ring carrier and an outer peripheral surface of said cavity forming member are each in the form of a cylindrical surface, and said inner peripheral surface of said piston ring carrier and said outer peripheral surface of said cavity forming member are joined with no gap therebetween.

With those features, since the cooling cavity is formed by joining the ring carrier body, which receives the piston ring assembled to the piston ring carrier, and the cavity forming member to each other, the cooling cavity can be positioned closer to the piston ring and a cooling effect can be enhanced. Also, since the cavity forming member is constructed by the tubular material and the cooling cavity is formed by the enclosed space in the cavity forming member, a material of the piston body is prevented from entering the cooling cavity in the cavity forming member during a casting step of the piston body. Further, since the ring carrier body and the cavity forming member assembled to the inner periphery side of the former are joined to each other by utilizing such a phenomenon that the ring carrier body is contracted upon sintering, the cavity forming member can be easily assembled to the ring carrier body in a more positively joined state between the ring carrier body and the cavity forming member. Moreover, a shape of the ring carrier body made of the metal-base sintered material can be realized with comparatively high flexibility and a desired material can be selected from a comparatively wide range. It is therefore possible to select a material that is superior in wear resistance at high temperatures and has a coefficient of thermal expansion close to that of the material of the piston body. Additionally, compatibility of the piston ring carrier with the piston body in the casting-in step can be easily improved by infiltration, etc.

In the above piston ring carrier with the cooling cavity, preferably, the ring carrier body and the cavity forming member are joined to each other by brazing.

With that feature, the ring carrier body and the cavity forming member are joined to each other with higher certainty.

According to another aspect of the present invention there is provided a piston ring carrier with a cooling cavity, for casting in a piston body and to which a piston ring, is connected, said piston ring carrier comprising an annular ring carrier body of a metal-base sintered material for receiving said piston ring, and an annular cavity forming member of a tubular material connected to the inner periphery of said ring carrier body, there being a brazed connection between said ring carrier body and said cavity forming member and, said cooling cavity being an enclosed space in said cavity forming member, an inner peripheral surface of said piston ring carrier and an outer peripheral surface of said cavity forming member are each in the form of a cylindrical surface, and said inner peripheral surface of said piston ring carrier and said outer peripheral surface of said cavity forming member are joined with no gap therebetween.

With those features, since the cooling cavity is formed by joining the ring carrier body, which receives the piston ring assembled to the piston ring carrier, and the cavity forming member to each other, the cooling cavity can be positioned closer to the piston ring and a cooling effect can be enhanced. Also, since the cavity forming member is constructed by the tubular material and the cooling cavity is formed by the enclosed space in the cavity forming member, a material of the piston body is prevented from entering the cooling cavity in the cavity forming member during a casting step of the piston body. Further, since the ring carrier body and the cavity forming member are joined to each other by brazing, they can be brazed, for example, at the same time as sintering, and the cavity forming member can be easily assembled to the ring carrier body in a positively joined state between the ring carrier body and the cavity forming member. Moreover, a shape of the ring carrier body made of the metal-base sintered material can be realized with comparatively high flexibility and a desired material can be selected from a comparatively wide range. It is therefore possible to select a material that is superior in wear resistance at high temperatures and has a coefficient of thermal expansion close to that of the material of the piston body. Additionally, compatibility of the piston ring carrier with the piston body in the casting-in step can be easily improved by infiltration, etc.

In the above piston ring carrier with the cooling cavity, preferably, a solder material for the brazing is a copper-nickel-manganese-base solder.

With that feature, the molten solder material is suppressed, for example, from penetrating into the metal-base sintered material, and satisfactory brazing can be achieved.

In the above piston ring carrier with the cooling cavity, joined areas of the ring carrier body and the cavity forming member have surface roughness in the range of 0.5 - 100 µm, preferably 1 - 20 µm.

The above surface roughness range is preferable from the viewpoints of joining fitness and joint strength especially when the ring carrier body is made of an iron-base sintered material.

In the above piston ring carrier with the cooling cavity, preferably, a tapered surface is formed in an upper inner peripheral portion of the ring carrier body so as to decline toward the inner periphery side, and an outer peripheral surface of the cavity forming member is projected upward beyond the tapered surface of the ring carrier body.

With those features, a groove formed between the tapered surface of the ring carrier body and the outer peripheral surface of the cavity forming member can be utilized for arranging therein the solder material for brazing. Also, in the brazing, the molten solder material is guided by the tapered surface of the ring carrier body to surely enter a gap between the ring carrier body and the cavity forming member. In addition, the solder material can be prevented from leaking to other portions than the joined surfaces.

To achieve the above object, according to still another aspect of the present invention, a method of manufacturing a piston ring carrier with a cooling cavity, which is cast in a piston body and to which a piston ring is assembled, characterised in that said method comprises the steps of: compressing raw material powder containing a metal as a main component to form a powder compacted body which becomes an annular ring carrier body receiving said piston ring assembled to said piston ring carrier; assembling an annular cavity forming member made of a tubular material to the inner periphery side of said powder compacted body; sintering said powder compacted body along with said cavity forming member; and joining a sintered body obtained by sintering said powder compacted body and said cavity forming member to each other based on contraction of said powder compacted body occurred upon sintering, whereby said cooling cavity is formed by an enclosed space in said cavity forming member is provided.

In the above method of manufacturing a piston ring carrier with a cooling cavity, preferably, the ring carrier body and the cavity forming member are brazed to each other during the sintering step.

By brazing the ring carrier body and the cavity forming member to each other at the same time as the sintering, an increase in the number of manufacturing steps can be suppressed.

To achieve the above object, according to still another aspect of the present invention, a method of manufacturing a piston ring carrier with a cooling cavity, which is cast in a piston body and to which a piston ring is assembled, characterised in that said method comprises the steps of: compressing raw material powder containing a metal as a main component to form a powder compacted body which becomes an annular ring carrier body receiving said piston ring assembled to said piston ring carrier; assembling an annular cavity forming member made of a tubular material to the inner periphery side of said powder compacted body; sintering said powder compacted body along with said cavity forming member; and joining a sintered body obtained by sintering said powder compacted body and said cavity forming member to each other by brazing during said sintering step, whereby said cooling cavity is formed by an enclosed space in said cavity forming member is provided.

By brazing the ring carrier body and the cavity forming member to each other at the same time as the sintering, an increase in the number of manufacturing steps can be suppressed.

In the above method of manufacturing a piston ring carrier with a cooling cavity, preferably, a solder material formed of a powder compacted body is used as a solder material for the brazing.

With that feature, satisfactory brazing can be achieved.

In the above method of manufacturing a piston ring carrier with a cooling cavity, preferably, a copper-nickel-manganese-base solder is used as a solder material for the brazing.

With that feature, the molten solder material is suppressed, for example, from penetrating into the metal-base sintered material, and satisfactory brazing can be achieved.

In the above method of manufacturing a piston ring carrier with a cooling cavity, preferably, a gap between joined areas of the ring carrier body and the cavity forming member, which are brazed to each other, is in the range of 0.01 - 0.8 mm, preferably 0.05 - 0.15 mm.

The above gap range is preferable from the viewpoints of joining fitness and joint strength especially when the ring carrier body is made of an iron-base sintered material.

In the above method of manufacturing a piston ring carrier with a cooling cavity, preferably, a sintering temperature is in the range of 1130 - 1150°C.

The above range of sintering temperature is also preferable as a joining temperature for the brazing especially when the ring carrier body is made of an iron-base sintered material.

In the above method of manufacturing a piston ring carrier with a cooling cavity, preferably, a sintering atmosphere is a nitrogen-base atmosphere.

Such a sintering atmosphere is also preferable as a joining atmosphere for the brazing especially when the ring carrier body is made of an iron-base sintered material.

In the above method of manufacturing a piston ring carrier with a cooling cavity, preferably, a sintering furnace used for the sintering is a continuous furnace.

In the above method of manufacturing a piston ring carrier with a cooling cavity, preferably, joined areas of the ring carrier body and the cavity forming member have surface roughness in the range of 0.5 - 100 µm, preferably 1.0 - 20 µm.

The above surface roughness range is preferable from the viewpoints of joining fitness and joint strength especially when the ring carrier body is made of an iron-base sintered material.

In the above method of manufacturing a piston ring carrier with a cooling cavity, preferably, a tapered surface is formed in an upper inner peripheral portion of the ring carrier body so as to decline toward the inner periphery side, and a solder material is arranged between the tapered surface and an outer peripheral surface of the cavity forming member in the brazing step.

With those features, in the brazing step, the molten solder material is guided by the tapered surface of the ring carrier body to surely enter the gap between the ring carrier body and the cavity forming member. In addition, the solder material can be prevented from leaking to other portions than the joined surfaces.

### BRIEF DESCRIPTION OF THE DRAWINGS

[Fig.1]
   This shows the embodiment of this invention, the piston ring carrier and the cross-sectional view of the piston body which is cast in the Claim 1.
[Fig.2]
   This is the cross-sectional view of the only above piston ring carrier.
[Fig.3]
   This is the exploded view of the only above piston ring carrier.
[Fig.4]
   This shows the embodiment of this invention, the piston ring carrier and the floor plan of the piston body in Claim 2.
[Fig.5]
   This shows the embodiment of this invention, the piston ring carrier and the cross-sectional view of the piston body in Claim 3.
[Fig.6]
   This shows the embodiment of this invention, the piston ring carrier and the cross-sectional view of the join in Claim 4.
[Fig.7]
   This shows the embodiment of this invention, the piston ring carrier and the cross-sectional view of the join in Claim 5.
[Fig.8]
   This shows the embodiment of this invention, the piston ring carrier and the cross-sectional view of the join in Claim 6.
[Fig.9]
   This shows the embodiment of this invention, the piston ring carrier and the cross-sectional view of the join in Claim 7.
[Fig.10]
   This shows the embodiment of this invention, the piston ring carrier and the cross-sectional view of the join in Claim 8.
[Fig.11]
   This shows the embodiment of this invention, the piston ring carrier and the cross-sectional view of the join in Claim 9.
[Fig.12]
   This is the cross-sectional view of the example of the prior piston.

### [Explanation of number]

- 11: Piston Body
- 19,20: Piston Rings
- 31: Piston Ring Carrier
- 32: Cooling Cavity
- 33: Ring Carrier Body
- 34: Cavity Forming Member
- 36: Solder Material for Brazing
- 42: Solder Material for Brazing
- 51: Tapered Surface
- 52: Solder Material for Brazing
- c: Slit of Join

### DESCRIPTION OF THE PREFERRED EMBODIMENTS

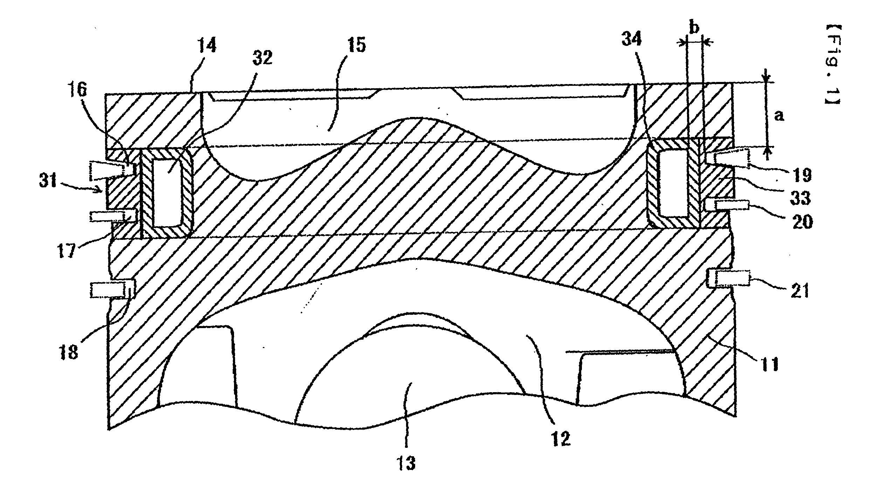

A piston ring carrier with a cooling cavity and a method of manufacturing the piston ring carrier according to the present invention will be described below in conjunction with an embodiment by referring to the drawings. A description is first made of the construction of a piston body and a piston ring carrier in detail. A piston to which the piston ring carrier of this embodiment is applied is used in an automobile engine. The piston mainly comprises a piston body 11 shown in Fig. 1. The piston body 11 is cast using an aluminum alloy material, e.g., an Al-Si-base alloy, and has a cavity 12 defined therein and a piston pin bore 13 communicating with the cavity 12. Also, a recess 15 is formed in a top surface 14 of the piston body 11, i.e., in an end surface of the piston body 11 facing a combustion chamber.

A plurality of annular piston ring grooves 16, 17 and 18 are formed in an outer peripheral surface of the piston. Piston rings 19, 20 and 21 sliding over an inner peripheral surface of a cylinder (not shown) are assembled in the piston ring grooves 16, 17 and 18, respectively. The piston ring groove 18 most spaced from the top surface 14 is formed directly in the piston body 11, whereas the other piston ring grooves 16 and 17 are formed in a piston ring carrier 31 with a cooling cavity, which is separate from the piston body 11. The piston ring carrier 31 is integrally cast in the piston body 11 at the same time as when the piston body 11 is cast. Further, a cooling cavity 32 is formed in the piston ring carrier 31, allowing oil to flow therethrough for cooling, and a passage hole (not shown) for supplying oil to the cooling cavity 32 is formed in the piston body 11.

A first example of the piston ring carrier 31 will now be described with reference to Figs. 1 to 3. The piston ring carrier 31 is fabricated by assembling an annular cavity forming member 34, which is formed of a metallic tubular material, to the inner periphery side of an annular ring carrier body 33 made of a metal-base sintered material. An enclosed space formed in the cavity forming member 34 defines the cooling cavity 32. Then, the ring carrier body 33 having the piston ring grooves 16 and 17 formed therein is made of a graphite precipitation iron-base sintered material. As an example of material composition, the iron-base sintered material contains Cr: 0.5 - 5 %, Mn: 0.2 - 1 %, S: 0.05 - 1 %, B: 0.05 - 1 %, C: 0.5 - 5 %, Ni: 1 - 12 %, Ti: 0.5 - 5 %, and Cu: 1 - 4 %. Also, it has such a structure that a matrix is mainly in austenite phase, and free graphite is precipitated and grown in pores. In addition, the composition of the sintered material is set such that the material is contracted with sintering. To realize this, by way of example, the content of Ni is increased. On the other hand, the cavity forming member 34 is made of ingot steel, e.g., austenitic stainless steel.

An inner peripheral surface of the piston ring carrier 31 and an outer peripheral surface of the cavity forming member 34 are joined to each other by sinter-fitting and brazing (described later). The inner peripheral surface of the piston ring carrier 31 and the outer peripheral surface of the cavity forming member 34 are each in the form of a cylindrical surface. Further, the piston ring carrier 31 has an axial length almost equal to that of the cavity forming member 34.

Next, a description is made of the piston ring carrier 31 with the cooling cavity and a method of manufacturing the piston using the piston ring carrier 31 with the cooling cavity. Of the carrier ring body 33 and the cavity forming member 34 jointly constituting the piston ring carrier 31, the cavity forming member 34 is obtained by, for example, pressing a tubular material into an annular member which has an outer peripheral surface shape in match with an inner peripheral surface shape of the ring carrier body 33. Both ends of the tubular material are abutted with each other and then welded while an enclosed space is defined in the cavity forming member 34 to serve as the cooling cavity 32.

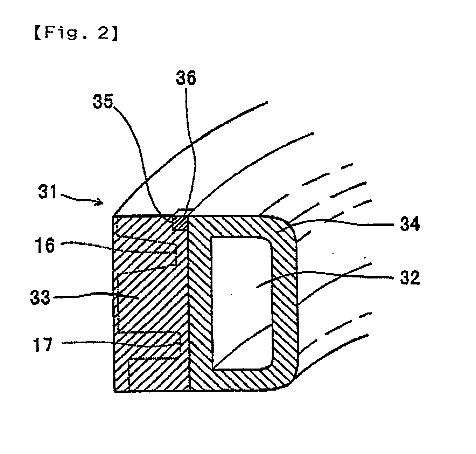

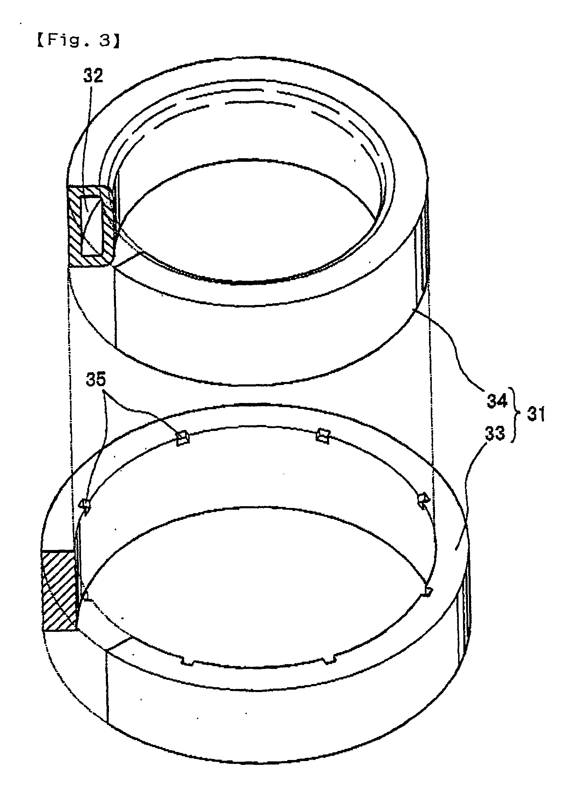

The ring carrier body 33 is manufactured by powder metallurgy. First, a powder compacted body as a blank of the ring carrier body 33 is formed from raw material powder (powder compacting step). More specifically, in this powder compacting step, the raw material powder is pressed and compressed using powder compacting press, thereby forming the powder compacted body. A compacting pressure is in the range of 5 - 7 t/cm², and a density ratio of the powder compacted body having been thus formed is in the range of 80 - 95 %. In the stage of powder compacting, the piston ring grooves 16 and 17 are not yet formed in the ring carrier body 33, and an outer peripheral surface of the ring carrier body 33 is in the form of a cylindrical surface, as shown in Figs. 2 and 3. Additionally, to form the piston ring grooves 16 and 17 later, the ring carrier body 33 is required to have some thickness.

Then, the cavity forming member 34 manufactured as described above is assembled to the inner periphery side of the ring carrier body 33 formed of the powder compacted body, and the ring carrier body 33 is heated and sintered along with the cavity forming member 34 in a sintering furnace (sintering step). A temperature in the sintering step is in the range of 1120 - 1150°C, and a sintering time is in the range of 30 minutes to 1 hour. Further, denatured gas of natural gas, or N₂-H₂ or ammonia decomposed gas is used as an atmosphere gas to form an endothermic reducing atmosphere.

During the sintering step, the ring carrier body 33 is contracted. On the other hand, the cavity forming member 34 made of stainless steel undergoes a less dimensional change than the ring carrier body 33. Accordingly, the ring carrier body 33 is tightly pressure-contacted with the cavity forming member 34, whereupon the ring carrier body 33 and the cavity forming member 34 are joined to each other. This is called sinter-fitting.

Further, in the sintering step, the ring carrier body 33 and the cavity forming member 34 may be additionally brazed together (brazing step). For the blazing, cutouts 35 are formed in an upper inner peripheral surface of the ring carrier body 33 at several positions and tablet-shaped solder materials 36 are placed in the cutouts 35 in the powder compacting step. The solder material 36 is a copper-base material. As an example of material composition, the solder material contains Mn: 12.3 - 17.0 %, Ni: 29.3 - 41.3 %, Fe: 0.21 - 21.5 %, B: 0 - 1.47 %, Si: 0 - 2.00 %, C: 0.02 - 0.43 %, O₂: 0.44 - 2.1 %, and the balance: Cu. By carrying out the sintering step in a condition where the solder materials 36 are placed in the cutouts 35, the solder materials 36 are molten under heat produced upon the sintering, and the molten solder penetrates into the boundary between the ring carrier body 33 and the cavity forming member 34 with a capillary phenomenon. As a result, the ring carrier body 33 and the cavity forming member 34 are more positively joined to each other in combination with the above-described sinter-fitting. To achieve the brazing with a satisfactory result, in particular, the sintering temperature is preferably set to fall in the range of 1130 - 1140°C.

Subsequently, an aluminum alloy that is a similar material to that of the piston body 11 is infiltrated to the ring carrier body 33 formed of a sintered body (infiltrating step). The same aluminum alloy, i.e., AC8A or AC8C (according to Japanese Industrial Standards (JIS)), as used in the piston body 11, is employed as an infiltration material. The infiltrating step is carried out by vacuum impregnation. More specifically, the piston ring carrier 31 is held at temperatures in the range of 700 - 750°C and evacuated for about one hour in a vacuum vessel to remove gas from pores in the sintered body constituting the ring carrier body 33 so that the infiltration material is smoothly impregnated into the pores. Thereafter, the piston ring carrier 31 is immersed in a molten aluminum alloy and is held under pressure of 8 atm. for 5 - 60 minutes. As a result, the pores in the sintered body are impregnated with the aluminum alloy.

The piston ring carrier 31 thus completed is cast in the piston body 11 at the same time as when the piston body 11 is cast under gravity (casting step). In the casting step, the piston ring carrier 31 is placed in a casting mold, and an Al-Si-base alloy as a material of the piston body 11 is molten and poured into the casting mold. The piston body 11 including the piston ring carrier 31 as an integral part is thereby formed.

Subsequently, the piston ring grooves 16 and 17 are formed by mechanical machining (cutting) in the ring carrier body 33 that constitutes an outer peripheral portion of the piston ring carrier 31. The reason why the piston ring grooves 16 and 17 are formed by post-machining resides in improving accuracy in position and dimension of the piston ring grooves 16 and 17.

As described above, since the piston ring carrier 31 is constructed by combining the ring carrier body 33 and the cavity forming member 34 with each other and the cooling cavity 32 is formed in the piston ring carrier 31 by the inner space of the cavity forming member 34, the cooling cavity 32 can be positioned closer to the piston ring grooves 16, 17 and hence the piston rings 19, 20. In other words, the distance *b* between the cooling cavity 32 and the piston ring grooves 16, 17 can be reduced, and therefore a cooling effect can be enhanced. Accordingly, wear of the piston ring carrier 31 under high temperatures can be suppressed. As a result, it is possible to reduce the distance *a* between the top surface 14 of the piston body 11 and the piston ring groove 16, to diminish an amount of combustion gas that is discharged as exhaust gas without being combusted, and to achieve cleaning of the exhaust gas.

Also, since the ring carrier body 33 and the cavity forming member 34 assembled to the inner periphery side of the former are joined to each other by utilizing such a phenomenon that the ring carrier body 33 is contracted upon sintering, the cavity forming member 34 can be easily assembled to the ring carrier body 33 in a more positively joined state between the ring carrier body 33 and the cavity forming member 34. Although such joint based on sinter-fitting is effective for joined surfaces in the radial direction, the joining effect due to sinter-fitting can be maximally utilized because the axial length of the inner peripheral surface of the ring carrier body 33 is set almost equal to that of the cavity forming member 34. Moreover, since the ring carrier body 33 and the cavity forming member 34 are additionally brazed together, the joint between the ring carrier body 33 and the cavity forming member 34 can be realized with higher certainty. Since the brazing is performed at the same time as sintering the power compacted body, an increase in the number of manufacturing steps can be avoided.

Further, since the cavity forming member 34 is constructed by the tubular member, no gap communicating with the cooling cavity 32 is left between the ring carrier body 33 and the cavity forming member 34, and the material of the piston body 11 is prevented from entering the cooling cavity 32 in the cavity forming member 34 during the casting step of casting the piston body 11, thus resulting in higher reliability. Since there is no need of welding the ring carrier body 33 and the cavity forming member 34 together, a production cost can be further cut down.

Furthermore, since the ring carrier body 33 in which the piston ring grooves 16 and 17 are formed is made of a metal-base sintered material, there are obtained such advantages that a shape of the ring carrier body 33 can be realized with comparatively high flexibility and a desired material can be selected from a comparatively wide range. For example, a graphite precipitation iron-base sintered material can be used as the material of the ring carrier body 33 as described in the above embodiment. The graphite precipitation iron-base sintered material is superior in wear resistance at high temperatures, and has a coefficient of thermal expansion close to that of an Al-Si-base alloy as the material of the piston body 11, thereby providing higher joint strength with respect to the piston body 11. Additionally, an attacking property of the graphite precipitation iron-base sintered material against the combined part is small.

Moreover, since an aluminum alloy is infiltrated into the ring carrier body 33 formed of a sintered body prior to being cast in the piston body 11, no gases are generated from pores of the ring carrier body 33 during the casting-in. Accordingly, a casting failure due to the generation of gases can be prevented, and adhesion between the piston body 11 and the ring carrier body 33 can be improved. Also, it is possible to improve thermal conductivity between the piston body 11 and the ring carrier body 33, and to obtain an effect of suppressing wear of the ring carrier body 33, in which the piston rings 19 and 20 are assembled, under high temperatures. In addition, the filtration can be performed at a relatively low cost.

On the other hand, the cavity forming member 34 is not required to have high wear resistance and hence can be easily and inexpensively manufactured from a metallic tubular material by pressing, etc. However, because the cavity forming member 34 is heated during the sintering step, it is preferably made of a material that is endurable against the heat applied during the sintering step and exhibits a less dimensional change under the heating. From this point of view, austenitic stainless steel is suitable as the material of the cavity forming member 34.

Thus, the piston ring carrier 31 with the cooling cavity can be provided which can ensure a high cooling effect, and which is superior in manufacturability and reliability.

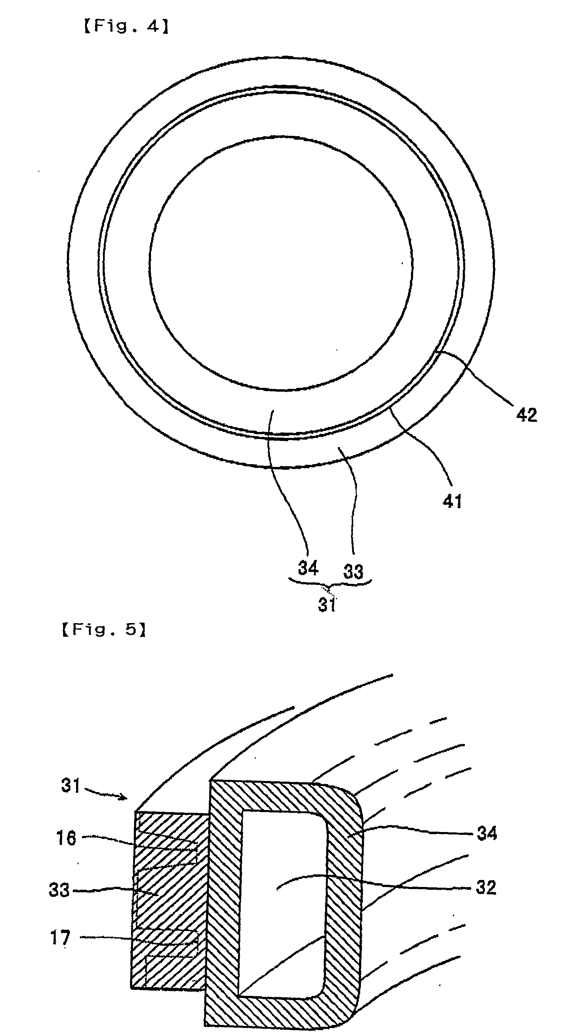

It is to be noted that the present invention is not limited to the above first example, but can be implemented in various modified forms. For instance, in the piston ring carrier 31 with the cooling cavity of the above first example, the tablet-shaped solder materials 36 are placed for brazing in the cutouts 35 formed in the upper inner peripheral surface of the ring carrier body 33 at several positions. As implemented in a second example shown in Fig. 4, however, an annular groove 41 may be formed along the entire circumference of the upper inner peripheral surface of the ring carrier body 33, and a linear solder material 42 may be placed in the annular groove 41. With the arrangement of the second example wherein the solder material 42 is placed along the entire circumference at the boundary between the ring carrier body 33 and the cavity forming member 34, the brazing can be achieved with higher certainty. There is however no problem in the above first example wherein the solder materials 36 are partly placed along the circumference, because the molten solder material 36 penetrates into the boundary between the ring carrier body 33 and the cavity forming member 34 with a capillary phenomenon. Rather than placing the solder materials 36 in the cutouts 35 or the groove 41, the solder material may be applied using a brush.

Further, while in the above first example the ring carrier body 33 and the cavity forming member 34 are joined to each other by not only the sinter-fitting based on contraction of the ring carrier body 33 upon sintering but also the brazing, they may be joined by the sinter-fitting alone. Conversely, they may be joined by the brazing alone. In the case of employing the brazing alone, the piston ring carrier 31 can also be manufactured through the same steps as with the above first example, and similar working advantages to those in the above first example can be obtained except for the advantage attributable to the sinter-fitting. Also, in the case of joining the ring carrier body 33 and the cavity forming member 34 by the brazing alone, the sintered material of the ring carrier body 33 is not necessarily required to contract upon sintering.

Moreover, while in the above first example the axial length of the piston ring carrier 31 is set almost equal to that of the cavity forming member 34, both the axial lengths are not necessarily required to be equal. As implemented by a third example shown in Fig. 5, for instance, the axial length of the cavity forming member 34 may be greater than that of the piston ring carrier 31 for increasing the size of the cooling cavity 32. This arrangement contributes to enhancing the cooling effect.

The case of brazing the ring carrier body 33 and the cavity forming member 34 together will now be described in more detail. The solder material used as a material for the brazing may be in various forms such as a powder, powder compacted body, washer, wire, paste and foil. Among them, the solder material in the form of a powder compacted body is preferable, but the powder compacted body may have various forms such as a pellet and ring. Generally, a copper solder, phosphor copper solder, brass solder, silver solder, gold solder, palladium solder, aluminum solder, silver-copper-base solder (noble metal solder), nickel solder, copper-nickel-manganese-base solder, etc. are known as solder materials. Among them, the copper-nickel-manganese-base solder is particularly preferable. Similarly to the above-described composition of the solder material, the copper-nickel-manganese-base solder contains, by weight %, Mn: 12 - 20 %, Ni: 25 - 45 %, Fe: 0 - 25 %, B: 0 - 1.5 %, Si: 0 - 2.0 %, C: 0.01 - 1.0 %, O₂: 0.1 - 3.0 %, and the balance: Cu. A preferable composition is given by, by weight %, Mn: 16.2 %, Ni: 40.1 %, Fe: 0.21 %, B: 1.47 %, Si: 2.0 %, C: 0.03 %, O₂: 0.44 %, and the balance: Cu. This powder composition is in terms of an alloy composition or a powder mixed composition. These two compositions may be combined with each other in use. Further, the solder material has such characteristics as apparent density of 1.5 - 2.5 g/cm², tapping density of 2.0 - 3.0 g/cm², fluidity of 40 - 80 seconds/50 g, and compacted body density of 5.0 - 6.0 g/cm² and Rattle value of 0.5 - 60.0 % for compression of 6 ton /cm². Preferable characteristics of the solder material are apparent density of 2.02 g/cm², tapping density of 2.37 g/cm², fluidity of 74 seconds/50 g, and compacted body density of 5.10 g/cm² and Rattle value of 52.0 % for compression of 6 ton /cm².

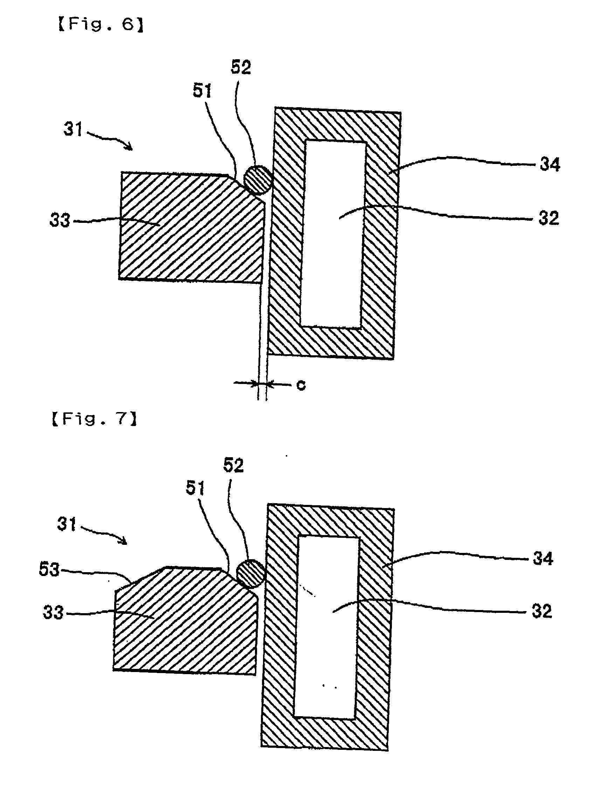

A gap *c* (shown in Fig. 6 in an exaggerated manner) between joined areas of the ring carrier body 33 and the cavity forming member 34 varies depending on the matrix (materials of the ring carrier body 33 and the cavity forming member 34) and the solder material used. When the ring carrier body 33 is made of an iron-base sintered material as with the above first example, the gap *c* at the joinend portion is preferably in the range of 0.01 - 0.8 mm from the viewpoints of joining fitness and joint strength, taking into account also the fact that the ring carrier body 33 is contracted upon sintering. If the gap *c* exceeds above 0.8 mm, voids would tend to occur more easily. If the gap *c* is smaller than 0.01 mm, filtration of the solder material would be deteriorated. A more preferable range of the gap *c* is 0.05 - 0.15 mm.

Although the sintering temperature, which also provides the joining temperature in the brazing, varies depending on the matrix and the solder material used, it is preferably in the range of 1130 - 1150°C when the ring carrier body 33 is made of an iron-base sintered material as with the above first example. In that temperature range, satisfactory joint due to the brazing can be achieved while maintaining satisfactory sintering.

Further, the sintering atmosphere, which also provides the joining atmosphere in the brazing, varies depending on the matrix and the solder material used, and may be a vacuum, hydrogen, an ammonia decomposed atmosphere, etc. When the ring carrier body 33 is made of an iron-base sintered material as with the above first example, a nitrogen-base atmosphere (N₂: 80 - 99 %, H₂: 1 - 20 %) that is an optimum atmosphere for sintered materials is preferable. By employing such an atmosphere, satisfactory joint due to the brazing can be achieved while maintaining satisfactory sintering.

Although a sintering furnace used for the sintering may be of, e.g., the continuous or box type, a continuous furnace is particularly preferable when the ring carrier body 33 is made of an iron-base sintered material as with the above first example. Productivity can be improved by using a continuous furnace.

It is also desired that surfaces to be brazed together have ruggedness to some extent. When the ring carrier body 33 is made of an iron-base sintered material as with the above first example, the joined areas of the ring carrier body 33 and the cavity forming member 34 have surface roughness preferably in the range of 0.5 - 100 µm, more preferably in the range of 1.0 - 20 µm. In that surface roughness range, joining fitness and joint strength can be improved. It is also effective to optionally form ruggedness in the joined area surfaces by shot blasting, etc.

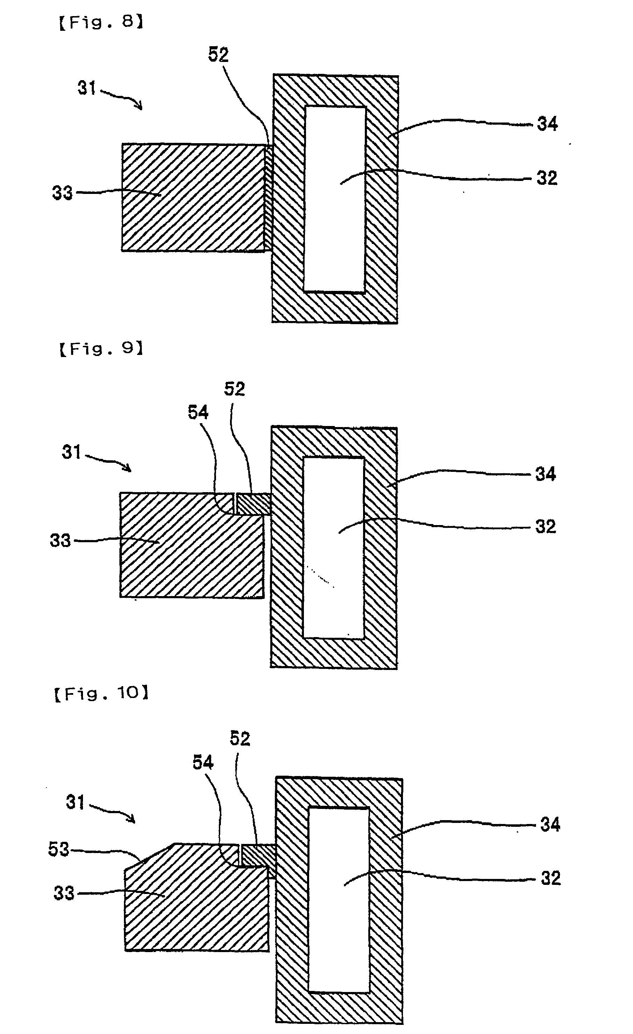

As shown in Figs. 6 to 10, the solder material can be arranged in any of various combinations depending on a shape of the solder material. Then, a shape of the ring carrier body may be changed depending on the composition and shape of the solder material. In a fourth example shown in Fig. 6 and a fifth example shown in Fig. 7, a tapered surface 51 is formed in an upper surface (one axial end surface) of the ring carrier body 33 at its inner peripheral portion so as to decline toward the inner periphery side, and the outer peripheral surface of the cavity forming member 34 is positioned so as to project upward beyond the tapered surface 51 of the ring carrier body 33. In the brazing step, the solder material 52 in the form of, e.g., a pellet, ring, paste or wire is arranged in a groove formed between the tapered surface 51 of the ring carrier body 33 and the outer peripheral surface of the cavity forming member 34. Furthermore, in the fifth example shown in Fig. 7, a tapered surface 53 is formed in the upper surface of the ring carrier body 33 at its outer peripheral portion so as to decline toward the outer periphery side. In a sixth example shown in Fig. 8, the solder material 52 in the form of, e.g., a paste, foil or powder is put in a gap between the cylindrical inner peripheral surface of the ring carrier body 33 and the cylindrical outer peripheral surface of the cavity forming member 34 in the brazing step. In a seventh example shown in Fig. 9, a stepped portion 54 is formed in the upper inner peripheral portion of the ring carrier body 33. Then, in the brazing step, the solder material 52 in the form of, e.g., a pellet, ring, washer or paste is arranged in a groove formed between the stepped portion 54 of the ring carrier body 33 and the outer peripheral surface of the cavity forming member 34. Further, in an eighth example shown in Fig. 10, a stepped portion 54 is formed in the upper inner peripheral portion of the ring carrier body 33. Then, in the brazing step, the solder material 52 in the form of, e.g., a pellet, ring, paste or foil is arranged to have an L-shaped section in a groove formed between the stepped portion 54 of the ring carrier body 33 and the outer peripheral surface of the cavity forming member 34. Of the above fourth to eighth examples, the fourth and fifth examples are preferable and, in particular, the fifth example is more preferable. In the fourth and fifth examples, the molten solder material 52 is guided by the tapered surface 51 to surely enter the gap between the ring carrier body 33 and the cavity forming member 34 in the brazing step. As a result, the brazing can be achieved with higher certainty.

While in the above fourth to eighth examples the ring carrier body 33 is positioned to face a central area of the cavity forming member 34 in the axial (vertical) direction, the ring carrier body 33 and the cavity forming member 34 may be positioned such that their lower surfaces are flush with each other as implemented by an eleventh example shown in Fig. 11.

Additionally, the shape of the ring carrier body, the shape of the cavity forming member, and/or the shape of the entire piston ring carrier are not limited to those shown in the above examples, those shapes may be variously changed. Also, the materials and manufacturing methods of the ring carrier body and the cavity forming member are not limited in their details to those described above, but may be modified in various ways. For instance, the arrangement of the solder material is not limited to the above examples, but the shapes of the solder material and the ring carrier body may be selected from various combinations. It is essential that those shapes be selected to be optimum for the joint between the ring carrier body and the cavity forming member.

According to one aspect of the present invention, in a piston ring carrier with a cooling cavity, which is cast in a piston body, an annular cavity forming member made of a tubular material is assembled to the inner periphery side of an annular ring carrier body made of a metal-base sintered material, and a cooling cavity is formed by an enclosed space in the cavity forming member. Therefore, the cooling cavity can be positioned closer to a piston ring and a cooling effect can be enhanced. Also, since the cavity forming member is constructed by the tubular material, a material of the piston body is prevented from entering the cooling cavity in the cavity forming member during a casting step of the piston body, thus resulting in higher reliability. Further, since the ring carrier body is made of a sintered material capable of contracting upon sintering and the ring carrier body and the cavity forming member are joined to each other by sinter-fitting, the cavity forming member and the ring carrier body can be easily and positively joined to each other. Moreover, since the ring carrier body is made of the metal-base sintered material, it is possible to realize a desired shape of the ring carrier body with high flexibility, and to select, for example, a material that is superior in wear resistance at high temperatures and has a coefficient of thermal expansion close to that of the material of the piston body. Additionally, compatibility of the piston ring carrier with the piston body in the casting-in step can be improved by infiltration, etc.

According to one preferable form of the above piston ring carrier with the cooling cavity, since the ring carrier body and the cavity forming member are joined to each other by brazing, the ring carrier body and the cavity forming member are joined to each other with higher certainty in addition to the above advantages.

According to another aspect of the present invention, in a piston ring carrier with a cooling cavity, which is cast in a piston body, an annular cavity forming member made of a tubular material is assembled to the inner periphery side of an annular ring carrier body made of a metal-base sintered material, and a cooling cavity is formed by an enclosed space in the cavity forming member. Therefore, the cooling cavity can be positioned closer to a piston ring and a cooling effect can be enhanced. Also, since the cavity forming member is constructed by the tubular material, a material of the piston body is prevented from entering the cooling cavity in the cavity forming member during a casting step of the piston body, thus resulting in higher reliability. Further, since the ring carrier body and the cavity forming member are joined to each other by brazing, they can be brazed, for example, at the same time as sintering. Accordingly, the ring carrier body and the cavity forming member can be easily and positively joined to each other. Moreover, since the ring carrier body is made of the metal-base sintered material, it is possible to realize a desired shape of the ring carrier body with high flexibility, and to select, for example, a material that is superior in wear resistance at high temperatures and has a coefficient of thermal expansion close to that of the material of the piston body. Additionally, compatibility of the piston ring carrier with the piston body in the casting-in step can be improved by infiltration, etc.

According to one preferable form of the above piston ring carrier with the cooling cavity, since a solder material for the brazing is a copper-nickel-manganese-base solder, the molten solder material is suppressed, for example, from penetrating into the metal-base sintered material, and satisfactory brazing can be achieved in addition to the above advantages.

According to another preferable form of the above piston ring carrier with the cooling cavity, since joined areas of the ring carrier body and the cavity forming member have surface roughness in the range of 0.5 - 100 µm, joining fitness and joint strength with the brazing can be improved in addition to the above advantages. A preferable surface roughness range of the joined areas is 1 - 20 µm.

According to still another preferable form of the above piston ring carrier with the cooling cavity, since a tapered surface is formed in an upper inner peripheral portion of the ring carrier body so as to decline toward the inner periphery side and an outer peripheral surface of the cavity forming member is projected upward beyond the tapered surface of the ring carrier body, the brazing can be achieved with higher certainty by arranging the solder material in a groove formed between the tapered surface of the ring carrier body and the outer peripheral surface of the cavity forming member in the brazing, in addition to the above advantages.

According to still another aspect of the present invention, in a method of manufacturing a piston ring carrier with a cooling cavity, which is cast in a piston body and to which a piston ring is assembled, the method comprises the steps of compressing raw material powder containing a metal as a main component to form a powder compacted body which becomes an annular ring carrier body receiving the piston ring assembled to the piston ring carrier; assembling an annular, metal-made cavity forming member to the inner periphery side of the powder compacted body; sintering the powder compacted body along with the cavity forming member; and joining a sintered body obtained by sintering the powder compacted body and the cavity forming member to each other based on contraction of the powder compacted body occurred upon sintering, whereby the cooling cavity is formed by an enclosed space in the cavity forming member. Therefore, the cooling cavity can be positioned closer to the piston ring and a cooling effect can be enhanced. Also, the ring carrier body and the cavity forming member having the cooling cavity formed therein can be easily and positively joined to each other. Further, since the cavity forming member is constructed by the tubular material, a material of the piston body is prevented from entering the cooling cavity in the cavity forming member during the casting step of the piston body, thus resulting in higher reliability. Moreover, since the ring carrier body is made of a metal-base sintered material, it is possible to select, for example, a material that is superior in wear resistance at high temperatures and has a coefficient of thermal expansion close to that of the material of the piston body. Additionally, compatibility of the piston ring carrier with the piston body in the casting-in step can be improved by infiltration, etc.

According to one preferable form of the above method of manufacturing a piston ring carrier with a cooling cavity, since the ring carrier body and the cavity forming member are brazed to each other during the sintering step, the joint between the ring carrier body and the cavity forming member can be made more positive while an increase in the number of manufacturing steps is suppressed, in addition to the above advantages.

According to still another aspect of the present invention, in a method of manufacturing a piston ring carrier with a cooling cavity, which is cast in a piston body and to which a piston ring is assembled, the method comprises the steps of compressing raw material powder containing a metal as a main component to form a powder compacted body which becomes an annular ring carrier body receiving the piston ring assembled to the piston ring carrier; assembling an annular cavity forming member made of a tubular material to the inner periphery side of the powder compacted body; sintering the powder compacted body along with the cavity forming member; and joining a sintered body obtained by sintering the powder compacted body and the cavity forming member to each other by brazing during the sintering step, whereby the cooling cavity is formed by an enclosed space in the cavity forming member. Therefore, the cooling cavity can be positioned closer to the piston ring and a cooling effect can be enhanced. Also, the ring carrier body and the cavity forming member having the cooling cavity formed therein can be easily and positively joined to each other. Further, since the cavity forming member is constructed by the tubular material, a material of the piston body is prevented from entering the cooling cavity in the cavity forming member during the casting step of the piston body, thus resulting in higher reliability. Moreover, since the ring carrier body is made of a metal-base sintered material, it is possible to select, for example, a material that is superior in wear resistance at high temperatures and has a coefficient of thermal expansion close to that of the material of the piston body. Additionally, compatibility of the piston ring carrier with the piston body in the casting-in step can be improved by infiltration, etc.

According to one preferable form of the above method of manufacturing a piston ring carrier with a cooling cavity, since a solder material formed of a powder compacted body is used as a solder material for the brazing, satisfactory brazing can be achieved in addition to the above advantages.

According to another preferable form of the above method of manufacturing a piston ring carrier with a cooling cavity, since a copper-nickel-manganese-base solder is used as a solder material for the brazing, the molten solder material is suppressed, for example, from penetrating into the metal-base sintered material, and satisfactory brazing can be achieved in addition to the above advantages.

According to still another preferable form of the above method of manufacturing a piston ring carrier with a cooling cavity, since a gap between joined areas of the ring carrier body and the cavity forming member, which are brazed to each other, is in the range of 0.01 - 0.8 mm, joining fitness and joint strength with the brazing can be improved in addition to the above advantages. A preferable gap range between the joined areas is 0.05 - 0.15 mm.

According to still another preferable form of the above method of manufacturing a piston ring carrier with a cooling cavity, since a sintering temperature is in the range of 1130 - 1150°C, satisfactory joint can be achieved by the brazing while satisfactory sintering is maintained, in addition to the above advantages.

According to still another preferable form of the above method of manufacturing a piston ring carrier with a cooling cavity, since a sintering atmosphere is a nitrogen-base atmosphere, satisfactory joint can be achieved by the brazing while satisfactory sintering is maintained, in addition to the above advantages.

According to still another preferable form of the above method of manufacturing a piston ring carrier with a cooling cavity, since a sintering furnace used for the sintering is a continuous furnace, productivity can be improved in addition to the above advantages.

According to still another preferable form of the above method of manufacturing a piston ring carrier with a cooling cavity, since joined areas of the ring carrier body and the cavity forming member have surface roughness in the range of 0.5 - 100 µm, joining fitness and joint strength with the brazing can be improved in addition to the above advantages. A preferable surface roughness range of the joined areas is 1.0 - 20 µm.

According to still another preferable form of the above method of manufacturing a piston ring carrier with a cooling cavity, since a tapered surface is formed in an upper inner peripheral portion of the ring carrier body so as to decline toward the inner periphery side and a solder material is arranged between the tapered surface and an outer peripheral surface of the cavity forming member in the brazing step, the brazing can be achieved with higher certainty by arranging the solder material in a groove formed between the tapered surface of the ring carrier body and the outer peripheral surface of the cavity forming member in the brazing, in addition to the above advantages.

## Claims

1. A piston ring carrier (31) with a cooling cavity (32), for casting in a piston body (11) and for receiving a piston ring (19, 20), **characterised by** said piston ring carrier comprising an annular ring carrier body (33) of a metal-base sintered material for receiving said piston ring (19, 20); and an annular cavity forming member (34) of tubular material connected to the inner periphery of said ring carrier body, said ring carrier body being of a material which is contractable upon sintering to join said ring carrier body and said cavity forming member together by sinter-fitted joint, said cooling cavity being provided by the enclosed space in said cavity forming member, an inner peripheral surface of said piston ring carrier (31) and an outer peripheral surface of said cavity forming member (34) are each in the form of a cylindrical surface, and said inner peripheral surface of said piston ring carrier (31) and said outer peripheral surface of said cavity forming member (34) are joined with no gap therebetween.

2. A piston ring carrier with a cooling cavity according to Claim 1, wherein said ring carrier body and said cavity forming member and joinable to each other by brazing.

3. A piston ring carrier (31) with a cooling cavity (32), for casting in a piston body (11) and to which a piston ring (19, 20), is connected, **characterised by** said piston ring carrier comprising an annular ring carrier body (33) of a metal-base sintered material for receiving said piston ring (19, 20), and an annular cavity forming member (34) of a tubular material connected to the inner periphery of said ring carrier body, there being a brazed connection between said ring carrier body and said cavity forming member and, said cooling cavity being an enclosed space in said cavity forming member, an inner peripheral surface of said piston ring carrier (31) and an outer peripheral surface of said cavity forming member (34) are each in the form of a cylindrical surface, and said inner peripheral surface of said piston ring carrier (31) and said outer peripheral surface of said cavity forming member (34) are joined with no gap therebetween.

4. A piston ring carrier with a cooling cavity according to Claim 3, wherein a solder material for said brazing is a copper-nickel-manganese-base solder.

5. A piston ring carrier with a cooling cavity according to Claim 3, wherein joinable areas of said ring carrier body and said cavity forming member have surface roughness in the range of 0.5 - 100 µm.

6. A piston ring carrier with a cooling cavity according to Claim 3, wherein a tapered surface (51) is in an upper inner peripheral portion of said ring carrier body so as to decline toward the inner periphery side, and an outer peripheral surface of said cavity forming member is projected upward beyond the tapered surface of said ring carrier body.

7. A method of manufacturing a piston ring carrier (31) with a cooling cavity (32), which is cast in a piston body (11) and to which a piston ring (19, 20, 21) is assembled, **characterised in that** said method comprises the steps of:
compressing raw material powder containing a metal as a main component to form a powder compacted body which becomes an annular ring carrier body (33) receiving said piston ring (19, 20) assembled to said piston ring carrier;
assembling an annular cavity forming member (34) made of a tubular material to the inner periphery side of said powder compacted body;
sintering said powder compacted body along with said cavity forming member; and
joining a sintered body obtained by sintering said powder compacted body and said cavity forming member to each other based on contraction of said powder compacted body occurred upon sintering,
whereby said cooling cavity is formed by an enclosed space in said cavity forming member.

8. A method of manufacturing a piston ring carrier with a cooling cavity according to Claim 7, wherein said ring carrier body and said cavity forming member are brazed to each other during said sintering step.

9. A method of manufacturing a piston ring carrier (31) with a cooling cavity (32), which is cast in a piston body (11) and to which a piston ring (19, 20, 21) is assembled, **characterised in that** said method comprises the steps of:
compressing raw material powder containing a metal as a main component to form a powder compacted body which becomes an annular ring carrier body (33) receiving said piston ring (19, 20) assembled to said piston ring carrier;
assembling an annular cavity forming member (34) made of a tubular material to the inner periphery side of said powder compacted body;
sintering said powder compacted body along with said cavity forming member; and
joining a sintered body obtained by sintering said powder compacted body and said cavity forming member to each other by brazing during said sintering step,
whereby said cooling cavity is formed by an enclosed space in said cavity forming member.

10. A method of manufacturing a piston ring carrier with a cooling cavity according to Claim 9, wherein a solder material formed of a powder compacted body is used as a solder material for the brazing.

## Patentansprüche

1. Kolbenringträger (31) mit einem Kühlhohlraum (32) zum Gießen in einen Kolbenkörper (11) und zum Aufnehmen eines Kolbenringes (19, 20), **dadurch gekennzeichnet, dass** der Kolbenringträger einen ringförmigen Ringträgerkörper (33) aus einem metallbasierten, gesinterten Material zum Aufnehmen des Kolbenringes (19, 20); und ein ringförmiges, hohlraumbildendes Element (34) aus röhrenförmigem Material, das mit dem inneren Umfang des Ringträgerkörpers verbunden ist, aufweist, wobei der Ringträgerkörper aus einem Material ist, das bei einem Sintern kontrahierbar ist, um den Ringträgerkörper und das hohlraumbildende Element durch eine Sinterpassverbindung zu verbinden, wobei der Kühlhohlraum durch den umschlossenen Raum in dem hohlraumbildenden Element vorgesehen ist, wobei eine innere Umfangsfläche des Kolbenringträgers (31) und eine äußere Umfangsfläche des hohlraumbildenden Elements (34) in der Form einer zylindrischen Fläche sind, und die innere Umfangsfläche des Kolbenringträgers (31) und die äußere Umfangsfläche des hohlraumbildenden Elements (34) sind ohne Spalt dazwischen verbunden.

2. Kolbenringträger mit einem Kühlhohlraum nach Anspruch 1, bei welchem der Ringträgerkörper und das hohlraumbildende Element miteinander durch Löten verbindbar sind.

3. Kolbenringträger (31) mit einem Kühlhohlraum (32) zum Gießen in einen Kolbenkörper und mit welchem ein Kolbenring (19, 20) verbunden ist, **dadurch gekennzeichnet, dass** der Kolbenringträger einen ringförmigen Ringträgerkörper (33) aus einem metallbasierten, gesinterten Material zum Aufnehmen des Kolbenrings (19, 20) und ein ringförmiges, hohlraumbildendes Element (34) aus einem röhrenförmigen Material, das mit dem inneren Umfang des Ringträgerkörpers verbunden ist, aufweist, wobei eine Lötverbindung zwischen dem Ringträgerkörper und dem hohlraumbildenden Element vorgesehen ist, und wobei der Kühlhohlraum ein umschlossener Raum in dem hohlraumbildenden Element ist, wobei eine innere Umfangsfläche des Kolbenringträgers (31) und eine äußere Umfangsfläche des hohlraumbildenden Elements (34) in der Form einer zylindrischen Fläche sind, und die innere Umfangsfläche des Kolbenringträgers (31) und die äußere Umfangsfläche des hohlraumbildenden Elements (34) sind ohne Spalt dazwischen verbunden.

4. Kolbenringträger mit einem Kühlhohlraum nach Anspruch 3, bei welchem ein Lötmaterial für das Löten ein Kupfer-Nickel-Mangan-basiertes Lötmaterial ist.

5. Kolbenringträger mit einem Kühlhohlraum nach Anspruch 3, bei welchem die verbindbaren Bereiche des Ringträgerkörpers und des hohlraumbildenden Elements eine Oberflächenrauhigkeit im Bereich von 0,5 - 100 µm besitzen.

6. Kolbenringträger mit einem Kühlhohlraum nach Anspruch 3, bei welchem eine verjüngte Fläche (51) in einem oberen, inneren Umfangsabschnitt des Ringträgerkörpers derart vorgesehen ist, um sich zu der Seite des inneren Umfangs hin zu neigen, und eine äußere Umfangsfläche des hohlraumbildenden Elements steht nach oben über die verjüngte Fläche des Ringträgerkörpers hervor.

7. Verfahren zum Herstellen eines Kolbenringträgers (31) mit einem Kühlhohlraum (32), der in einen Kolbenkörper (11) gegossen ist und an welchem ein Kolbenring (19, 20, 21) angebracht ist, **dadurch gekennzeichnet, dass** das Verfahren die Schritte aufweist:
Komprimieren eines Rohmaterialpulvers, das ein Metall als Hauptkomponente enthält, um einen pulververdichteten Körper zu bilden, der ein ringförmiger Ringträgerkörper (33) wird, welcher den Kolbenring (19, 20) aufnimmt, welcher an dem Kolbenringträger angebracht wird;
Anbringen eines ringförmigen, hohlraumbildenden Elements (34), das aus einem röhrenförmigen Material hergestellt ist, seitens des inneren Umfangs des pulververdichteten Körpers;
Sintern des pulververdichteten Körpers zusammen mit dem hohlraumbildenden Element; und
Verbinden eines durch Sintern des pulververdichteten Körpers und des hohlraumbildenden Elements miteinander erhaltenen, gesinterten Körpers basierend auf einer Kontraktion des pulververdichteten Körpers, die beim Sintern auftritt,
wobei der Kühlhohlraum durch einen umschlossenen Raum in dem hohlraumbildenden Element gebildet wird.

8. Verfahren zum Herstellen eines Kolbenringträgers mit einem Kühlhohlraum nach Anspruch 7, bei welchem der Ringträgerkörper und das hohlraumbildende Element miteinander während des Sinterschritts verlötet werden.

9. Verfahren zum Herstellen eines Kolbenringträgers (31) mit einem Kühlhohlraum (32), der in einen Kolbenkörper (11) gegossen ist und an welchem ein Kolbenring (19, 20, 21) angebracht ist, **dadurch gekennzeichnet, dass** das Verfahren die Schritte aufweist:
Komprimieren eines Rohmaterialpulvers, das ein Metall als Hauptkomponente enthält, um einen pulververdichteten Körper zu bilden, der ein ringförmiger Ringträgerkörper (33) wird, welcher den Kolbenring (19, 20) aufnimmt, der an dem Kolbenringträger angebracht wird;
Anbringen eines ringförmigen hohlraumbildenden Elements (34), das aus einem röhrenförmigen Material hergestellt ist, seitens des inneren Umfangs des pulververdichteten Körpers; und
Sintern des pulververdichteten Körpers zusammen mit dem hohlraumbildenden Element; und
Verbinden eines durch Sintern des pulververdichteten Körpers und des hohlraumbildenden Elements miteinander erhaltenen, gesinterten Körpers durch Verlöten während des Sinterschritts,
wobei der Kühlhohlraum durch einen umschlossenen Raum in dem hohlraumbildenden Element gebildet wird.

10. Verfahren zum Herstellen eines Kolbenringträgers mit einem Kühlhohlraum nach Anspruch 9, bei welchem ein aus einem pulververdichteten Körper gebildetes Lötmaterial als Lötmaterial für das Löten verwendet wird.

## Revendications

1. Support de segment de piston (31) comportant une cavité de refroidissement (32) destiné à un moulage dans un corps de piston (11) et à recevoir un segment de piston (19, 20), **caractérisé par** ledit support de segment de piston comprenant un corps de support de segment annulaire (33) d'un matériau fritté à base de métal destiné à recevoir ledit segment de piston (19, 20), et un élément formant une cavité annulaire (34) d'un matériau tubulaire relié à la périphérie intérieure dudit corps de support de segment, ledit corps de support de segment étant d'un matériau qui peut se contracter lors du frittage afin de réunir ensemble ledit corps de support de segment et ledit élément de formation de cavité par une liaison ajustée par frittage, ladite cavité de refroidissement étant fournie par l'espace enfermé dans ledit élément de formation de cavité, une surface périphérique intérieure dudit support de segment de piston (31) et une surface périphérique extérieure dudit élément de formation de cavité (34) se présentent chacun sous la forme d'une surface cylindrique, et ladite surface périphérique intérieure dudit support de segment de piston (31) et ladite surface périphérique extérieure dudit élément de formation de cavité (34) sont réunis sans aucun intervalle entre elles.

2. Support de segment de piston comportant une cavité de refroidissement selon la revendication 1, dans lequel ledit corps de support de segment et ledit élément de formation de cavité peuvent être réunis l'un à l'autre par brasage.

3. Support de segment de piston (31) comportant une cavité de refroidissement (32), destiné à un moulage dans un corps de piston (11) et auquel un segment de piston (19, 20) est relié, **caractérisé par** ledit support de segment de piston comprenant un corps de support de piston annulaire (33) réalisé en un matériau fritté à base de métal destiné à recevoir ledit segment de piston (19, 20), et un élément de formation de cavité annulaire (34) d'un matériau tubulaire relié à la périphérie intérieure dudit corps de support de segment, une liaison brasée existant entre ledit corps de support de segment et ledit élément de formation de cavité et, ladite cavité de refroidissement étant un espace enfermé dans ledit élément de formation de cavité, une surface périphérique intérieure dudit support de segment de piston (31) et une surface périphérique extérieure dudit élément de formation de cavité (34) sont chacun sous la forme d'une surface cylindrique, et ladite surface périphérique intérieure dudit support de segment de piston (31) et ladite surface périphérique extérieure dudit élément de formation de cavité (34) sont réunies sans aucun intervalle entre elles.

4. Support de segment de piston comportant une cavité de refroidissement selon la revendication 3, dans lequel un matériau de soudure pour ledit brasage est un matériau de soudure à base de cuivre-nickel-manganèse.

5. Support de segment de piston comportant une cavité de refroidissement selon la revendication 3, dans lequel des zones pouvant être réunies dudit corps de support de segment et dudit élément de formation de cavité ont une rugosité de surface dans plage de 0,5 à 100 µm.

6. Support de segment de piston comportant une cavité de refroidissement selon la revendication 3, dans lequel une surface chanfreinée (51) se trouve dans une partie périphérique intérieure supérieure dudit corps de support de segment de manière être en pente vers le côté périphérique intérieur, et une surface périphérique extérieure dudit élément de formation de cavité dépasse vers le haut au-delà de la surface conique dudit corps de support de segment.

7. Procédé de fabrication d'un support de segment de piston (31) comportant une cavité de refroidissement (32), qui est moulé dans un corps de piston (11) et auquel un segment de piston (19, 20, 21) est assemblé, **caractérisé en ce que** ledit procédé comprend les étapes consistant à :
comprimer la poudre de matériau de base contenant un métal comme composant principal afin de former un corps compacté en poudre qui devient un corps de support de segment annulaire (33) recevant ledit segment de piston (19, 20) assemblé audit support de segment de piston,
assembler un élément de formation de cavité annulaire (34) constitué d'un matériau tubulaire sur le côté périphérique intérieur dudit corps compacté en poudre,
fritter ledit corps compacté en poudre en même temps que ledit élément de formation de cavité, et
réunir un corps fritté obtenu en frittant ledit corps compacté en poudre et ledit élément de formation de cavité l'un à l'autre sur la base de la contraction dudit corps compacté en poudre survenue lors du frittage,
grâce à quoi ladite cavité de refroidissement est formée par un espace enfermé dans ledit élément de formation de cavité.

8. Procédé de fabrication d'un support de segment de piston comportant une cavité de refroidissement selon la revendication 7, dans lequel ledit corps de support de segment et ledit élément de formation de cavité sont brasés l'un avec l'autre au cours de l'étape de frittage.

9. Procédé de fabrication d'un support de segment de piston (31) comportant une cavité de refroidissement (32), lequel est moulé dans un corps de piston (11) et auquel un segment de piston (19, 20, 21) est assemblé, **caractérisé en ce que** ledit procédé comprend les étapes consistant à :
comprimer une poudre de matériau de base contenant un métal comme composant principal pour former un corps compacté en poudre qui devient un corps de support de segment annulaire (33) recevant ledit segment de piston (19, 20) assemblé audit support de segment de piston,
assembler un élément de formation de cavité annulaire (34) constitué d'un matériau tubulaire au côté périphérique intérieur dudit corps compacté en poudre,
fritter ledit corps compacté en poudre en même temps que ledit élément de formation de cavité, et
réunir un corps fritté obtenu en frittage ledit corps compacté en poudre et ledit élément de formation de cavité l'un à l'autre par brasage au cours de ladite étape de frittage,
grâce à quoi ladite cavité de refroidissement est formée par un espace enfermé dans ledit élément de formation de cavité.

10. Procédé de fabrication d'un support de segment de piston comportant une cavité de refroidissement selon la revendication 9, dans lequel un matériau de soudure constitué d'un corps compacté en poudre est utilisé comme matériau de soudure pour le brasage.
